# EUROPEAN PATENT APPLICATION

(11) **EP 4 716 120 A1**
(43) Date of publication of application: **25.03.2026**
(21) Application number: 25203097.8
(22) Date of filing: 18.09.2025
(51) Int. Cl.: H04J 14/02

(54) **BIDIRECTIONAL OPTICAL CONTROL DEVICE AND METHOD**

(30) Priority: 19.09.2024 US 202418889874
(71) Applicant: Nokia Solutions and Networks Oy, 02610 Espoo (FI)
(72) Inventor: Szczerban Gonzalez, Mijail, 07974-0636 Murray Hill (US); Borkowski, Robert, 07974-0636 Murray Hill (US); Vijayan, Kovendhan, 08817 Edison (US)
(74) Representative: Ipsilon Belgium

(57) **Abstract**

A bi-directional optical controller includes an upstream optical interface, a downstream optical interface, and an optical circuit coupling the interfaces such that optical signals received at either interface is routed to the other interface. The optical circuit is adapted to allow, for example, enable or disable, a first set of prespecified optical services to be provided in at least one of the upstream or downstream direction on an optical signal received at the respective downstream or upstream interface.

## Description

### TECHNICAL FIELD

Various exemplary embodiments disclosed herein relate to optical control devices for controlling services on optical communications networks.

### BACKGROUND

Optical communication networks enable the high-speed, high-capacity infrastructure that underpins modern digital communications. There are several types of optical communication networks, each designed for specific purposes and characterized by different architectures, technologies, and performance levels. One example is passive optical networks (PONs).

PONs provide broadband access. PON's may have a point-to-multi-point (P2MP) topology, in which one optical line terminal (OLT) at the network side (sometimes the network side is called the "central office") is used to connect to a multitude (e.g., 32 or 64) of optical network units (ONUs) at the user side by means of an optical distribution network (ODN), or fiber plant that contains optical fibers and passive optical splitters, but usually no active components.

Other examples include metro or core optical network segments that are non-passive.

In order to share the available spectrum of the fiber medium, most PON technologies utilize time-division multiplexing (TDM) schemes, in which the fiber medium is shared in the time domain between the different ONUs. In the downstream direction, each ONU receives the same signals.

Network operators desire to provide services internet access, voice, and data services to end-users using fiber optical networks from the entities that own the physical fiber optic cables, conduits, ducts, poles, and other related infrastructure. The optical fiber infrastructure owners typically handle the deployment, maintenance, and management of the fiber network, while the network operators operate the network layer that runs on top of the fiber infrastructure, providing communication services.

Typically, fiber infrastructure owners lease network capacity to communication service provider (CSP). The relationship between optical fiber infrastructure owners and CSPs often defines how services are delivered over fiber networks.

Currently, however, optical fiber infrastructure owners have no ability to -physically enforce and- control which optical services are running at each section of their network in an automated fashion. Thus, there is a need for new ways to enforce third party utilization policies in network infrastructure.

### SUMMARY OF THE INVENTION

The scope of protection sought for various example embodiments is set out by the independent claims. The embodiments and features described in this specification that do not fall within the scope of the independent claims, if any, are to be interpreted as examples useful for understanding various example embodiments.

Embodiments of the invention relate to optical fiber communication networks upon which different optical services can operate in parallel, using, for example, different wavelengths, wavelength bands or modes. According to embodiments of the present invention provides an optical control device also called an "In-Line optical fiber service bidirectional Physical Control Device" (ILPCD), which is adapted to control services provided in either or both directions of an optical fiber. For example, the ILPCD can be configured to control which network services are enabled to run in an optical fiber by controlling the spectral regions or modes that can pass through it in one or both propagation directions.

When a fiber infrastructure serves different users (e.g., a neutral operator case), with the invention, a network owner can control which services can operate at different segments of their network, and with this, control the optical service that is being provided. For example, the present invention may be adapted to control services such as, PON generation, wavelength division multiplexing (WDM) system, optical fiber sensing, etc.

According embodiments of the present invention, the ILPCD allows for the control of the type of optical services running in different segments of the network, controlling each direction of propagation independently. The ILPCD can be instrumental in enforcing network owner/operators policies in context where network owners/operators lease part of the infrastructure among multiple parties and each user is authorized to use certain type of services in specific regions of the fiber network.

Embodiments of the present invention enable new business models where the network owner has the ability to charge based on the geographical reach, time of the day, and spectral width that is required by each network operator.

According to embodiments of the invention, the ILPCD can also be used as an optical network demarcation point to implement hard-physical-network slicing by controlling which services are allowed to transit from one network region to another.

According to embodiments of the invention, in PON environments, the ILPCD can also work as a Multipath Interference (MPI) control device as we can allow for specific channels to transit in a single direction.

According to embodiments of the invention, an optical control device includes a first interface and a second interface coupled by an optical circuit. The optical circuit is adapted to filter selected wavelengths of light on an optical signal received at the first interface and transmit the filtered wavelengths onto the second interface. The optical circuit is also adapted to filter selected wavelengths of light on an optical signal received at the second interface and transmit the filtered wavelengths onto the first interface. The device can discriminate between the two directions of propagation and filter selected wavelengths of light in each direction independently
Embodiments of the invention are directed to a bi-directional optical controller, comprising an upstream optical interface; a downstream optical interface; and an optical circuit coupling the upstream with the downstream interface such that optical signals received at either interface is routed to the other interface. The optical circuit is adapted to allow a first set of prespecified optical services to be provided in at least one of the upstream or downstream direction on an optical signal received at the respective downstream or upstream interface.

According to embodiments of the invention, the bi-directional optical controller also includes a first optical circulator coupled with the upstream interface adapted to route a first optical signal received at the upstream port via a first optical path to the downstream interface; and a second optical circulator coupled with the downstream interface adapted to route a second optical signal received at the downstream port via a second optical path to the upstream interface.

According to embodiments of the invention, the first optical path comprises one or more first optical components adapted to allow a first set of prespecified optical services to be provided in the downstream direction on the first optical signal; and the second optical path comprises one or more second optical components adapted to allow a second set of prespecified optical services to be provided in the upstream direction on the second optical signal.

According to embodiments of the invention, one or more first optical components comprises one or more first wavelength selective switches.

According to embodiments of the invention, one or more second optical components comprises one or more second wavelength selective switches.

According to embodiments of the invention, the first optical path comprises one or more first optical filters, each first optical filter adapted to allow a selected wavelength of light to pass to the downstream interface.

According to embodiments of the invention, second optical path comprises one or more second optical filters, each second optical filter adapted to allow a selected wavelength of light to pass to the upstream interface.

According to embodiments of the invention, the optical circuit further comprises a first optical filter that filters an optical signal in the upstream direction to allow first one or more PON generation bands to pass in the upstream direction; and a second optical filter that filters an optical signal in the downstream direction to allow second one or more PON generation band to pass in the downstream direction.

According to embodiments of the invention, optical circuit further comprises a first optical shutter optically coupled with the first optical filter adapted to enable and disable the first one or more PON generation bands; and a second optical shutter optically coupled with said second optical filter adapted to enable and disable the second one or more PON generation bands.

According to embodiments of the invention, the optical circuit further comprises a first expansion interface adapted to optically couple with an additional optical circuit adapted to allow a second set of prespecified optical services to be provided in at least one of the upstream or downstream direction on an optical signal.

According to embodiments of the invention, optical circuit further comprises one or more polarization scramblers adapted to scramble an optical signal such to prevent SoP sensing of the optical signal.

According to embodiments of the invention, the optical control device can be placed at any point of the fiber infrastructure to create optical service demarcation points (or control points).

According to embodiments of the invention, the optical control device can distinguish between the two possible directions of propagation of each one of the supported optical services.

According to embodiments of the invention, the device can control independently the supported wavelength ranges in each one of the directions.

The same principle that applies to wavelengths can also be applied to modes in a multimode optical communication system so that we can control which optical modes are transiting the network segment.

According to embodiments of the invention, the optical control device can be modular and provides extension ports to support more other optical services, for instance, other PON generations or specific optical fiber sensing mechanisms could be enabled or disabled in either direction.

According to embodiments of the invention, the optical control device can control which sections of a PON are enabled for each optical service.

According to embodiments of the invention, neutral operators (e.g., infrastructure owner) leasing their infrastructure to third parties can control which sections of the network is used by each communication service provider (CSP) controlling which sections of the network are enabled for each optical service (PON generation, per-direction WDM link control, sensing, etc).

According to embodiments of the invention, the optical control device can be configured to prevent system affectation from malfunctioning endpoints by limiting the reach of specific signals.

According to embodiments of the invention, the optical control device can be configured to disable upstream (downstream) communication from an endpoint (e.g. ONU) from transmitting specific wavelengths into the upstream fiber infrastructure while allowing downstream (upstream) signals to reach the endpoint and vice versa.

According to embodiments of the invention, the optical control device can prevent optical fiber sensing control in sensitive access regions (e.g. close to critical infrastructure).

According to embodiments of the invention, the optical control device can prevent system affectation from malfunctioning endpoints by limiting the reach of specific signals.

According to embodiments of the invention, the optical control device can disable US (DS) communication from an endpoint (e.g. ONU) from transmitting specific wavelengths into the upstream fiber infrastructure while allowing DS (US) signals to reach the endpoint and vice versa.

Embodiments of the invention can be used in non-passive optical networks as well PONs. Not only in access passive networks but also could be used in other network segments such as metro or core optical network segments. Some submarine cable systems have special EDFAs that would have dedicated wavelengths that would bypass their internal isolators so that cOTDR or other type of sensing services or fault detections can be used.

Optical services can include any given PON generation or multiple PON generations using the optical network infrastructure, it can also include optical fiber sensing services based for example on optical time domain reflectometry (ORTD) or other distributed acoustic sensing (DAS) system. PON and fiber sensing services typically use the two directions of light propagation in a single fiber, but other optical services based on unidirectional propagation such as typical wavelength-division multiplexed (WDM) transport systems can also be controlled (enabled/disabled) by embodiments of the ILPCD.

According to embodiments of the invention, the optical control device may include one or more optical amplifiers adapted to compensate for device or line losses in the upstream or downstream direction.

### BRIEF DESCRIPTION OF DRAWINGS

Embodiments of the present invention are illustrated by way of example with reference to the accompanying drawings Figures (Figs. or FIGS.), which should not be construed to limit the present disclosure.
Figure 1 is a diagram of an optical control device according to embodiments of the present invention.
Figure 2 is a diagram of an optical control device using WSS according to embodiments of the present invention.
Figure 3 is a second diagram of an optical control device according to embodiments of the present invention.
Figure 4 a diagram of a modular optical control device according to embodiments of the present invention.
Figure 5 is a third diagram of an optical control device according to embodiments of the present invention.
Figure 6 is a fourth diagram of an optical control device according to embodiments of the present invention.
Figure 7 is a diagram illustrating an optical control device positioned within an optical network to control services according to embodiments of the present invention.

### DETAILED DESCRIPTION

The following descriptions are presented to enable any person skilled in the art to create and use apparatuses, systems and methods described herein. It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

According to embodiments of the presentation invention, an optical control device (i.e., the ILPCD) allows for the control of the type of optical services running in different segments of the network, controlling each direction of propagation independently. The ILPCD can be placed at any fiber segment and controls which type of optical services can be transferred from one side of the device into the other side in each propagation direction.

This optical control device can be instrumental in enforcing network owner/operators policies in context where network owners/operators lease part of the infrastructure among multiple parties and each user is authorized to use certain type of services in specific regions of the fiber network. It can also be used as an optical network demarcation point to implement hard -physical-network slicing by controlling which services are allowed to transit from one network region to another. In PON environments this device can also work as a Multipath Interference (MPI) control device as we can allow for specific channels to transit in a single direction.

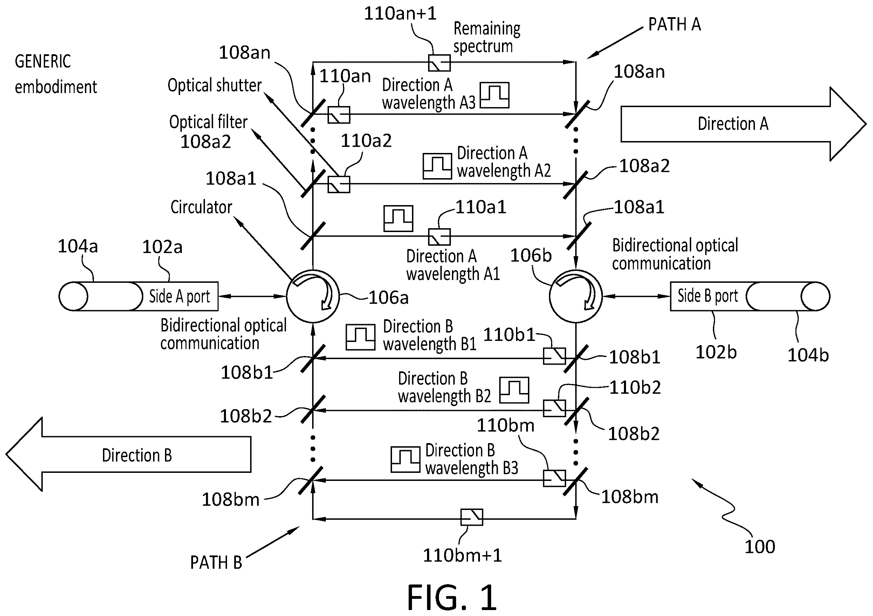

Figure 1 shows a basic embodiment of the optical control device according to embodiments of the present invention. ILPCD 100 includes optical circuitry adapted to filter selected wavelengths of light on optical signals received in two directions. As shown in the example of Figure 1, ILPCD 100 including two fiber optical interfaces, e.g., ports 102a, 102b, interfacing two sides of the protected fiber segment 104a, 104b. Two optical circulators 106a, 106b are coupled with each interface 102a, 102b, and separate the two propagation directions, creating two separate branches, or paths, which may each independently control the frequency bands, (and type of service) that is enabled for each direction (Direction A and Direction B). Light entering port 102a (i.e., in Direction A) is diverted to Path A and is directed by optical circulator 106b to exist port 102b in the Direction A. Likewise, light entering port 102b (i.e., in Direction B) is diverted to Path B and is directed by optical circulator 106a to exist port 102a in the Direction B.

Each Path may have multiple branches or subpaths that can include optical components to filter and to control selected spectrum. As shown, Path A includes a number n of optical filters 108a1, 108a2, 108an to separate spectral bands into sub-paths or sub-branches (wavelengths A1, A2, A3) and control them independently by using, for example, optical shutters or gates 110a1, 110a2, 110an, 110n+1 at each one of the Path A wavelength sub-branches.

Similarly, Path B may include a number m of optical filters 108b1, 108b2, 108bm to separate spectral bands (wavelengths B1, B2, B3) and control them independently by using optical shutters or gates 110b1, 110b2, 110bm, 110bm+lat each one of the Path B wavelength sub-branches.

The gates are normally dynamic, while the optical filters can be active or passive, but should allow a selected wavelength to pass or reflect to a sub-path while all other light passes through to the next filter. In the most basic embodiment, an ILPCD can be pre-configured to cover/control desired/preselected wavelengths and services. However, a control circuit (not shown) may be also included. For example, a control circuit may receive in-band control signals via the connected fiber or via an out-of-band control channel e.g., from an OLT or some other device, and switch optical gates on or off. Gates and filters could also be tunable/configurable manually.

As an example, ILPCD 100 could be configured to enable two bidirectional services in a single fiber, one that uses optical band (OB) 1 for direction A and OB-2 for direction B, while the second service can use OB-3 for direction B and OB-4 for direction A. Optical signals in bands different from OB-1 and OB-2 would not be able to transit from side 1 to side 2 of the device, while from side B to side A, only services using OB-3 and OB-4 bands in this direction would be able to operate.

Any number of sub-branches may be employed in either direction. Optical filters can be fixed or adjustable to allow for the reconfiguration of optical bands controlled in each direction, increase the flexibility of service allocation, and allow for new generation of services to be deployed in the fiber.

Other implementations of the ILPCD are contemplated. For example, according to some embodiments of the present invention, an ILPCD can use wavelength selective switches (WSS), to control which regions of the spectrum are allowed in each direction and advances features such as power control in a per-service basis.

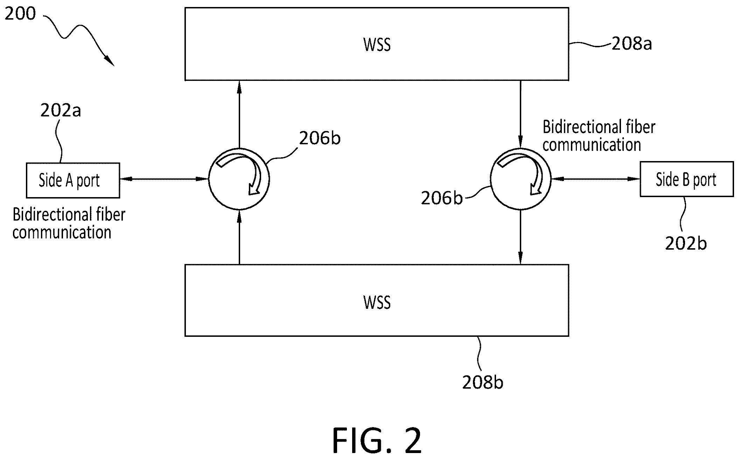

Figure 2 is a diagram an ILPCD comprising WSS according to embodiments of the present invention. ILPCD 200 includes optical circuitry to create two paths. For example, ILPCD 200 may include two fiber optical interfaces, e.g., ports 202a, 202b, interfacing two sides of the fiber segment (not shown). Two optical circulators 206a, 206b are coupled with each interface 202a, 202b, and separate the two propagation directions, creating two separate branches, or paths, to WSS 208a, 208b. The output of WSS 208a is connect to interface 202b while the output of WSS 208b is connect to interface 202a. Thus, light in Direction A is received at port 202a, processed by WSS 208a, and output in the A direction at interface 202b. Likewise, light in Direction B is received at port 202b, processed by WSS 208b, and output in the B direction at interface 202a. Thus, each WSS 208a, 208b may be configured to statically or dynamically route selected wavelengths of light (optical channels) from one optical circulator to the other, for example, from optical circulator 206a to 206b in Direction A.

The skilled person will understand that each WSS can act like a reconfigurable optical filters that can selectively switch and direct light to control services in a particular direction, shape and further manipulate optical signals.

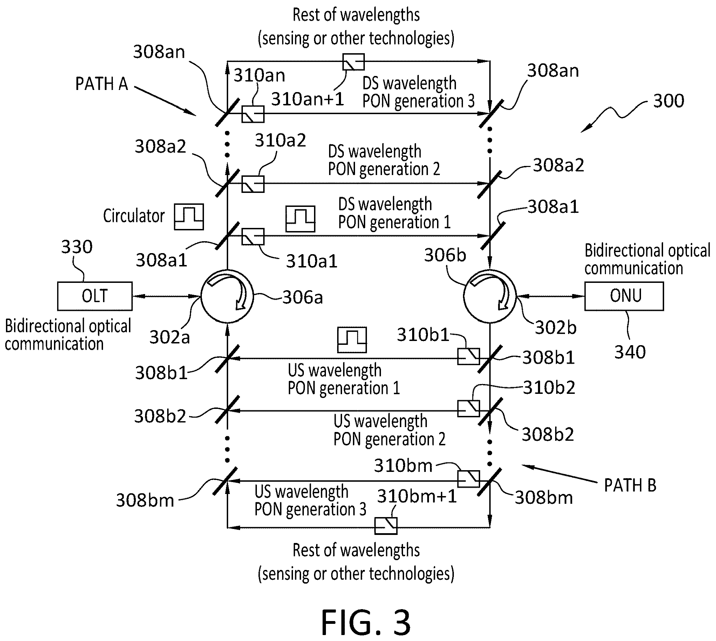

Figure 3 is a diagram of an exemplary ILPCD adapted for PON. As shown, ILPCD 300 has two interfaces, a first interface 302a connected to the upstream side of the fiber in a PON, directly or indirection to an OLT 330, and a second interface 302b connected to the downstream side of the fiber, directly or indirection to one or more ONUs 340.

Two optical circulators 306a, 306b are coupled with each interface 302a, 302b, and separate the two propagation directions, creating two separate branches, or paths, which may each independently control the frequency bands that is enabled for each direction (to ONU 340 (i.e., downstream) and to OLT 330 (i.e., upstream)).

Each branch or path may include various optical components to filter and to control selected spectrum such that each path utilizes a different PON generation band (e.g., GPON, EPON, XGS-PON). A pair of filters (one per direction) may be provided for a given service, such as a PON generation band, for upstream and downstream signals. Each filter can have an associated optical shutter so that each corresponding service, such as PON generation, can be enabled or disabled. Some filters serve more than one service, in this case, a single optical shutter can restrict multiple generations.

Accordingly, as shown, Path A includes a number n of optical filters 308a1, 308a2, 308an to separate spectral bands into sub-paths or sub-branches (PON generation 1, 2, 3) and control them independently by using, for example, optical shutters or gates 310al, 310a2, 310an, 310an+1 at each one of the Path A wavelength sub-branches.

Similarly, Path B may include a number m of optical filters 308b1, 308b2, 308bm to separate spectral bands (PON generation 1, 2, 3) and control them independently by using optical shutters or gates 310b1, 310b2, 310bm, 310bm+1 at each one of the Path B wavelength sub-branches.

As shown in this example, services that may be enabled and disabled may include PON generation and, in this example, only PON generations 1, 2 and 3 are being enabled. Path A and Path B can be correspondingly configured with matching filters and gates for those PONs. Of course, other services, such as other PONs, could be controlled by the ILPCD.

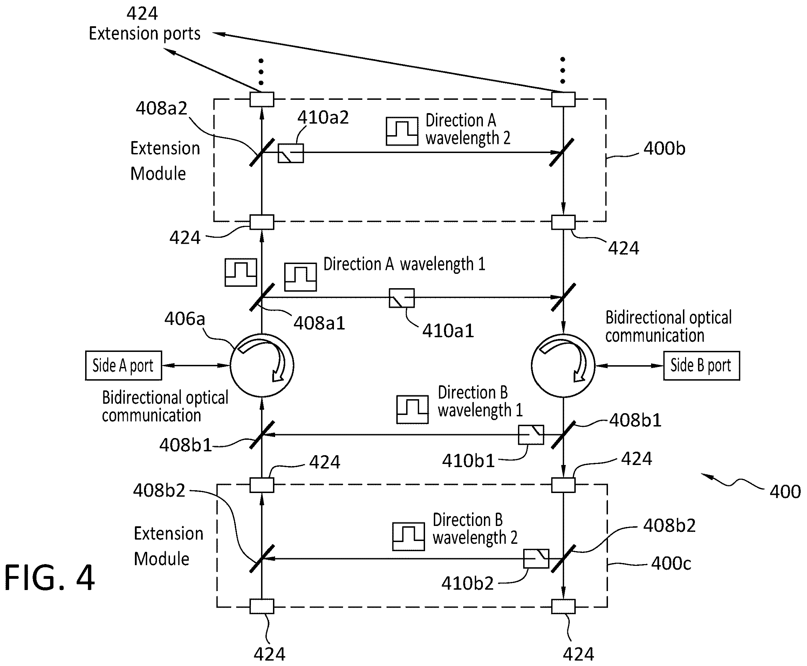

According to embodiments of the present invention, the ILPCD may be scalable and modular. Figure 4 is a diagram of exemplary modular ILPCD according to an embodiment of the present invention.

ILPCD 400 is designed similar to ILPCD 100, but includes expansion ports 424, which may be optical ports or optical line fiber ports, and which allow additional sub-paths to be connected in one or both directions. A main module of the device 400a may have expansion ports on top and/or bottom, connect to filters 408al and 408b1, to allow each Path A, B to expand. Each expansion module 400b, 400c may include one or more subpaths. Here, as shown, expansion module 400a is coupled into Path A and includes optical filter 408al and gate 410al, while expansion module 400b is in Path B and includes optical filter 408b1 and gate 410b1. Each expansion module 400b, 400c may include a plurality of expansion ports 424 in order to allow for additional modules to be connected. The expansion ports can be single direction or bidirectional, but should allow optical signals to travel in Direction A and B as in other embodiments.

Thus, ILPCD 400 is expandable to include as many subpaths as desired. This allows for expandable, modular designs that can allow to add client interfaces as needs appear in the field and support new optical service types or generations. As shown in Figure 4, the ILPCD has a parallel expandable architecture, where, in addition to the line fiber ports, two pair of optical ports 424 are available to connect the next ILPCD module to serve other wavelengths (PON generations, sensing services, WDM carriers, etc.).

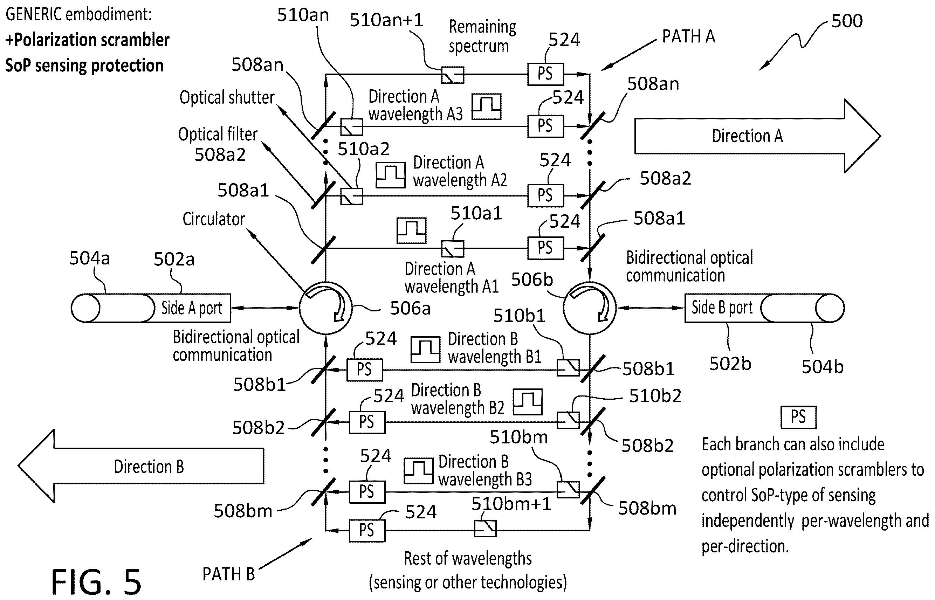

Figure 5 is a diagram of another exemplary ILPCD according to embodiments of the present invention. Similar to ILPCD 100, ILPCD 500 includes optical circuitry including two fiber optical interfaces, e.g., ports 502a, 502b, interfacing two sides of the protected fiber segment 504a, 504b. Two optical circulators 506a, 506b are coupled with each interface 502a, 502b, and separate the two propagation directions, creating two separate branches, or paths, which may each independently control the frequency bands (and type of service) that is enabled for each direction (Direction A and Direction B). Light entering port 502a (i.e., in Direction A) is diverted to Path A and is directed by optical circulator 506b to exit port 502b in the Direction A. Likewise, light entering port 502b (i.e., in Direction B) is diverted to Path B and is directed by optical circulator 506a to exit port 102a in the Direction B.

Each branch or path may include various optical components to filter and to control selected spectrum. As shown, Path A includes a number n of optical filters 508a1, 508a2, 508an to separate spectral bands into sub-paths or sub-branches (wavelengths A1, A2, A3) and control them independently by using, for example, optical shutters or gates 510a1, 510a2, 510an, 510an+1 at each one of the Path A wavelength sub-branches.

Similarly, Path B may include a number m of optical filters 508b1, 508b2, 508bm to separate spectral bands (wavelengths B1, B2, B3) and control them independently by using optical shutters or gates 510b1, 510b2, 510bm, 510bm+1 at each one of the Path B wavelength sub-branches.

Each sub-branch of ILPCB 500 may also include polarization scramblers 524 to control SoP-type of sensing independently per-wavelength and per-direction. For example, a coherent transponder can performing sensing by tracking the state of polarization. Polarization scrambling can prevent the transponder detecting that particular wavelength without affecting quality of transmission. This could be accomplished passively or actively.

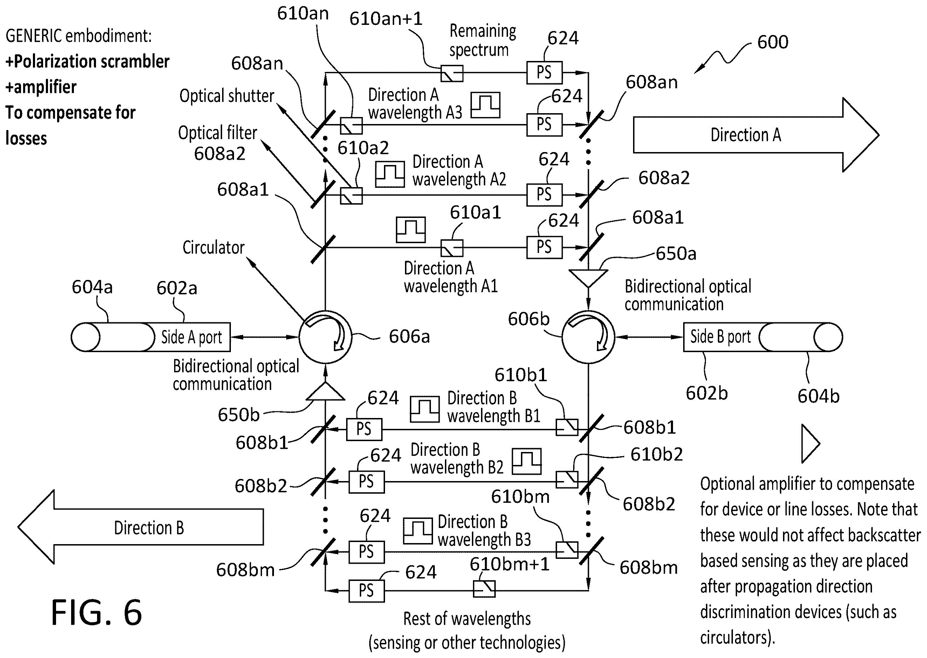

Figure 6 is a diagram of another exemplary ILPCD according to embodiments of the present invention. ILPCD 600, in this example, is the same as ILPCD 500 except optical amplifiers 650a, 650b are added to compensate for device or line losses. The amplifiers 650a, b are preferably positioned immediate prior to optical circulators 506a, 506b in the light path direction, after processing of each signal, so as to not affect backscatter based sensing. Note that in case these amplifiers use isolators, no affectation to bidirectional services or backscatter-based sensing would occur. Backscatter light will pass through the amplifiers.

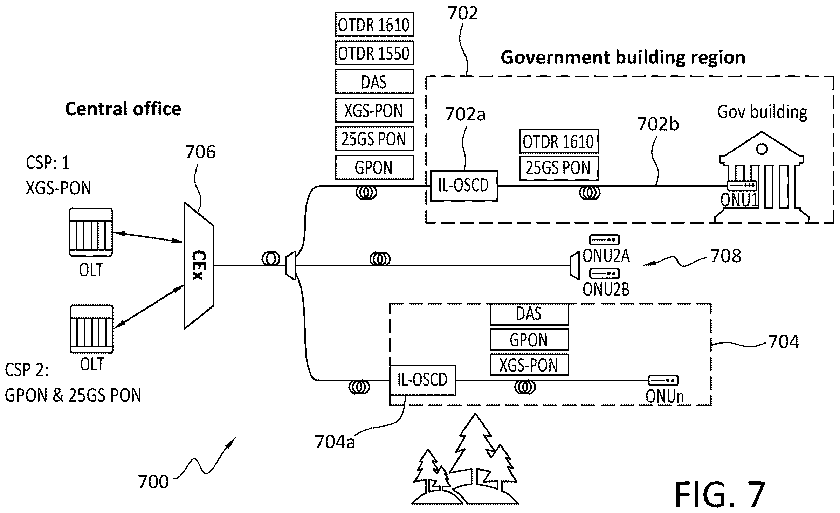

As described above, the present invention can be used to create domain regions where specific optical serves are allowed (e.g., PON generation, sensing types, etc.), and dynamically to control which services are enables at each region. Figure 7 is a diagram illustrating exemplary use cases for the ILPCD according to embodiments of the present invention. The example of Figure 7 is a PON access scenario.

As shown, two CSPs (CSP1, CSP2) share the same ODN 700. In this example, CSP1 uses XGS-PON while CSP2 uses GPON and 25GS PON, can be connect to the same ODN 700 via a coexistence element (CEx) 706, which may be a passive optical device that allows multiple generations of PON technologies (such as GPON, XG-PON, XGS-PON, NG-PON2, and others) to coexist on the same optical fiber infrastructure without interfering with each other. One of the customers, for example a government building 702 can only be reached by 25GS PON and sensing is not allowed in that branch of the ODN 702b. An ILPCD 702a can place within the ODN 702b and be configured to allow only XGS-PON communications between CSP2 and building 702, and ILPCD 702a can also be configured to prevent sensing by the OLT, as already described herein.

A second customer 704, here a forest region, can be restricted to XGS-PON and requires dynamic acoustic sensing (DAS) for operations like detecting wildfires, landslides, etc. An ILPCD 704a can be configured to allow only XGS-PON communications between CSP1 and region 704 but also to provide the DAS service.

Additional customers 708 may be connected to both CSP1 and CSP2 without any ILPCD and therefore, can obtain any PON transmitted to them, but the infrastructure owner cannot control the services to customers 708.

Although specific embodiments of the invention have been described and illustrated, the invention is not to be limited to the specific forms or arrangements of parts so described and illustrated.

The scope of the invention is to be defined by the claims appended hereto and their equivalents.

### List of abbreviations

The following abbreviations were used herein and are given the following meanings:
ONU = optical network unit
OLT = optical line terminal
PON = passive optical network
ILPCD = In-Line optical fiber service bidirectional Physical Control Device
ODN = optical distribution network
WDM = wavelength division multiplexing
CSP = communication service provider.

In this description, numerous details are set forth for the purpose of explanation. However, one of ordinary skill in the art will realize that the invention may be practiced without the use of these specific details. In other instances, well-known structures and processes are shown in block diagram form in order not to obscure the description of the invention with unnecessary detail. Thus, the present disclosure is not intended to be limited to the embodiments shown, but is to be accorded the widest scope consistent with the principles and features disclosed herein.

In describing exemplary embodiments, specific terminology is used for the sake of clarity. For purposes of description, each specific term is intended to at least include all technical and functional equivalents that operate in a similar manner to accomplish a similar purpose. Additionally, in some instances where a particular exemplary embodiment includes a plurality of system elements, device components or method steps, those elements, components or steps may be replaced with a single element, component or step. Likewise, a single element, component or step may be replaced with a plurality of elements, components or steps that serve the same purpose. Moreover, while exemplary embodiments have been shown and described with references to particular embodiments thereof, those of ordinary skill in the art will understand that various substitutions and alterations in form and detail may be made therein without departing from the scope of the invention. Further still, other embodiments, functions and advantages are also within the scope of the invention.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A bi-directional optical controller, comprising:
an upstream optical interface (102a, 202a, 302a);
a downstream optical interface (102b, 202b, 302b); and
an optical circuit coupling said upstream with said downstream interface such that optical signals received at either interface is routed to the other interface, said optical circuit adapted to allow a first set of prespecified optical services to be provided in at least one of the upstream or downstream direction on an optical signal received at the respective downstream or upstream interface.

2. The bi-directional optical controller according to claim 1, wherein said optical circuit comprises:
a first optical circulator (106a, 206a, 306a) coupled with said upstream interface adapted to route a first optical signal received at said upstream port via a first optical path to said downstream interface; and
a second optical circulator (106b, 206b, 306b) coupled with said downstream interface adapted to route a second optical signal received at said downstream port via a second optical path to said upstream interface.

3. The bi-directional optical controller according to claim 2, wherein said first optical path comprises one or more first optical components adapted to enable or disable the first set of prespecified optical services to be provided in the downstream direction on said first optical signal.

4. The bi-directional optical controller according to claim 3, wherein said second optical path comprises one or more second optical components adapted to allow a second set of prespecified optical services to be provided in the upstream direction on said second optical signal.

5. The bi-directional optical controller according to claim 3, wherein said one or more first optical components comprises one or more first wavelength selective switches.

6. The bi-directional optical controller according to claim 4, wherein said one or more second optical components comprises one or more second wavelength selective switches.

7. The bi-directional optical controller according to claim 2, wherein said first optical path comprises one or more first optical filters (308a1, 308a2, 308an), each first optical filter adapted to allow a selected wavelength of light to pass to the downstream interface.

8. The bi-directional optical controller according to claim 2, wherein said second optical path comprises one or more second optical filters (308b1, 308b2, 308bm), each second optical filter adapted to allow a selected wavelength of light to pass to the upstream interface.

9. The bi-directional optical controller according to claim 1, wherein said optical circuit further comprises:
a first optical filter that filters an optical signal in the downstream direction to allow first one or more PON generation bands to pass in the downstream direction.

10. The bi-directional optical controller according to claim 1, wherein said optical circuit further comprises:
one or more subpaths in the upstream or downstream direction, at least one of said subpaths comprising at least one of an optical filter (508a1, 508a2, 508an) and an optical shutter (510a1, 510a2, 510an, 510an+1), such that one or more of the first set of prespecified optical services may be enabled or disabled.

11. The bi-directional optical controller according to claim 1, wherein said optical circuit further comprises:
an upstream expansion interface adapted to optically couple with an additional optical circuit adapted to allow one or more prespecified optical services to be provided in the upstream direction on an optical signal.

12. The bi-directional optical controller according to claim 1, wherein said optical circuit further comprises:
a downstream expansion interface adapted to optically couple with an additional optical circuit adapted to allow one or more prespecified optical services to be provided in the downstream direction on an optical signal.

13. The bi-directional optical controller according to claim 1, wherein said optical circuit further comprises:
one or more polarization scramblers (524) adapted to scramble an optical signal such to prevent state of polarization sensing of said optical signal.

14. The bi-directional optical controller according to claim 1, wherein said optical circuit further comprises an optical amplifier adapted to compensate for device or line losses in the upstream or downstream direction.
